# EUROPEAN PATENT SPECIFICATION

(11) **EP 3 723 930 B1**
(45) Date of publication and mention of the grant of the patent: **03.09.2025**
(21) Application number: 18889108.9
(22) Date of filing: 05.11.2018
(51) Int. Cl.: B23K 3/00, B23K 3/08, B23K 37/00, B23K 37/04, H05K 3/34, B23K 101/38

(54) **LINE TYPE SOLDERING SYSTEM**
LINIEN-LÖTSYSTEM
SYSTÈME DE BRASAGE DE TYPE LINÉAIRE

(30) Priority: 15.12.2017 TR 201720537
(43) Date of publication of application: 21.10.2020
(73) Proprietor: Elopar Elektrik Ve Otomotiv Parçalari Sanayi Ve Ticaret Anonim Sirketi, Beylikdüzü/Istanbul (TR)
(72) Inventor: SANDAL, Mehmet, Beylikdüzü, Istanbul (TR)
(74) Representative: Yamankaradeniz, Kemal
(86) International application number: PCT/TR2018/050658
(87) International publication number: WO 2019/117838

(56) References cited:
- EP-A1- 2 269 757
- EP-B1- 0 129 962
- CN-A- 105 921 864
- CN-U- 201 586 812
- CN-U- 203 791 780
- US-A- 4 634 832
- US-A1- 2003 127 124
- US-A1- 2015 183 049
- US-B1- 8 011 557

## Description

### THE RELATED ART

The invention relates to a line type soldering system developed to provide electrical and mechanical connection of more than one metal not having connection, see claim 1.

The invention particularly relates to a line type soldering system providing automatic performance of soldering work by means of controlling parameters such as heat, time etc. needed for said operation, allowing movement of soldered material in a manner integrated with line and connection topology where it will be used and allowing customization for line and connection topology.

### BACKGROUND OF THE RELATED ART

Connection of two metals not having connection by help of a filling material having low melting point is called soldering. Today, there are various systems and embodiments for sake of soldering in industrial term. At present, automatic soldering systems located on a fixed profile are used. In such systems, firstly the material to be soldered is soldered on said fixed profile and then soldered material is carried on the line having related connection topology and is located in the related place in the topology. The necessity of movement constantly between the line and soldering machine slows down the process and therefore causes loss of time. On the other hand, this situation causes lost of work force for the operator. Thus the efficiency of the process decreases. On the line systems located on a moving mechanism, the operator is required to locate the material soldered into related place on the topology by means of trying to integrate on the line. For that reason, the operator needs to locate the material soldered during the time it passes in front of the line into related place on the connection topology. The operator goes to soldering machine and stock the material he solders and then needs to locate it into proper places after going to the line. All of these processes not only increases use of work force but also causes time and efficiency loss.

During the preliminary search of the related art, the patent numbered EP2091686B1 was found. The invention mentioned in said document relates to field of joining systems without welding such as hard soldering and soft soldering and particularly metal joining system using non-silver or low silver filling metals. However, said invention does not disclose any technical development for soldering for industrial purposes and placement in the related line.

The patent document numbered US8011557B1 (describing the preamble of claim 1) shows an automatic soldering machine for soldering wires, each exposing at least one core wire and electronic components with at least one soldering portion respectively. The automatic soldering machine comprises an equipment, a delivery mechanism, a plurality of clamps, a feeding mechanism, an insulation removing mechanism, a soldering mechanism, an unloading mechanism and a programmable control system. However, the offered structure not suitable for soldering wide and long materials.

The patent document numbered CN203791780U discloses an automatic tin soldering machine used for welding electric wires. The automatic tin soldering machine is characterized by being composed of an electric cabinet, a workbench and an automatic tin conveying machine, the electric cabinet and the automatic tin conveying machine are arranged on the two sides of the workbench respectively, the electric cabinet is connected with a power source wire, a portal frame is arranged above the workbench and is provided with an air cylinder, the lower end of the air cylinder is connected with a welding gun, the air cylinder is connected with an air source through an air pipe, the automatic tin conveying machine outputs soldering tin harnesses, the harnesses penetrate through a through hole in the portal frame, the harnesses are arranged on the welding gun, and a control box is arranged on one side face of the workbench and is electrically connected with the electric cabinet. However, the offered structure not suitable for soldering wide and long materials.

As a result, due to above described disadvantages and inadequacy of existing solutions it has been necessary to make novelty and development in the related art.

### BRIEF DESCRIPTION OF THE INVENTION

The present invention relates to a line type soldering system meeting the needs mentioned above, eliminating all disadvantages and providing some additional advantages in order to make easier for the disable to get on/off vehicles.

Main purpose of the invention is to provide a line type soldering system wherein required parameters of soldering procedures are automatically controlled. Thus the difficulties during and after soldering process are minimized and more stable soldering is provided.

Another purpose of the invention is to disclose a line type soldering system facilitating integration of material soldered as a result of soldering into connection topology of line type. Linear movement systems provided in said line type soldering system provides convenient placement of soldering unit for connection topology and thus provides saving in time and work force.

According to the present invention, a line type soldering system for use in soldering processes is defined in claim 1.

Further preferred embodiments of the present invention are defined in the dependent claims.

The structural and characteristics features of the invention and all advantages will be understood better in detailed descriptions with the figures given below and with reference to the figures, and therefore, the assessment should be made taking into account the said figures and detailed explanations.

### BRIEF DESCRIPTION OF FIGURES

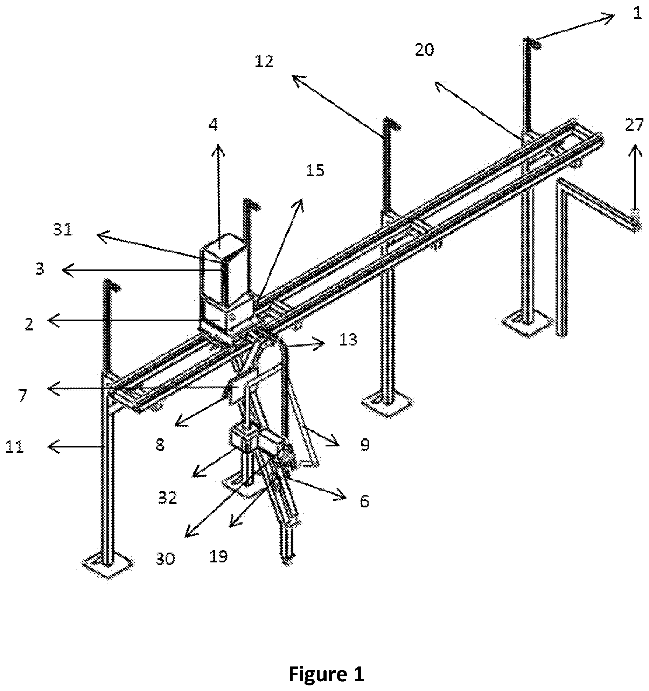

Figure 1 shows general view of a preferred embodiment of the line type soldering system of the invention.

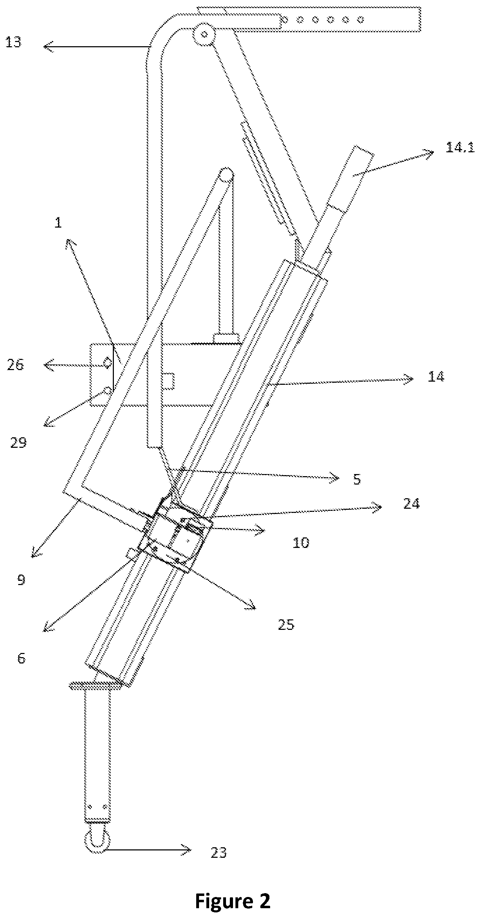

Figure 2 is a side perspective view of arm profile and components thereon.

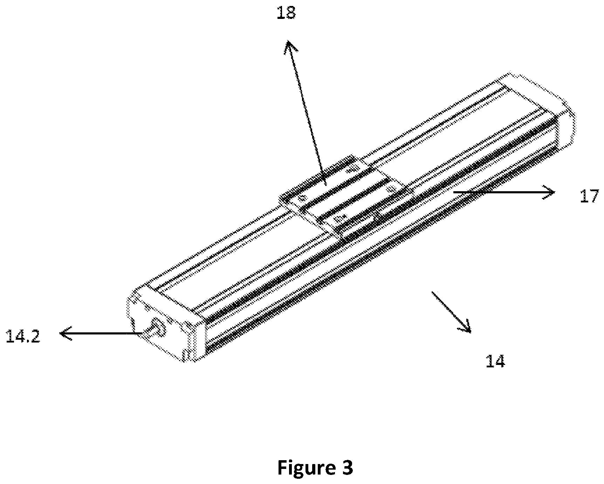

Figure 3 is side perspective view of vertical linear motion system.

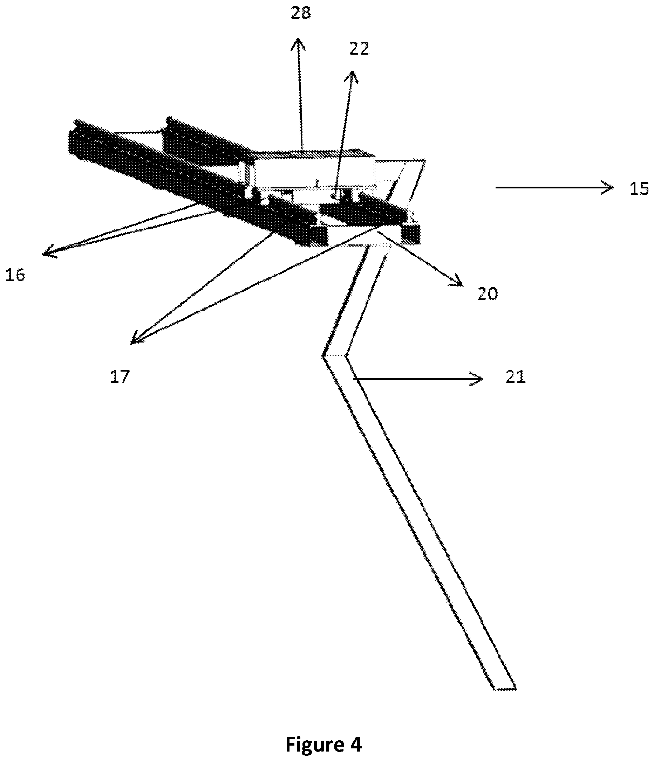

Figure 4 is side perspective view of horizontal linear motion system.

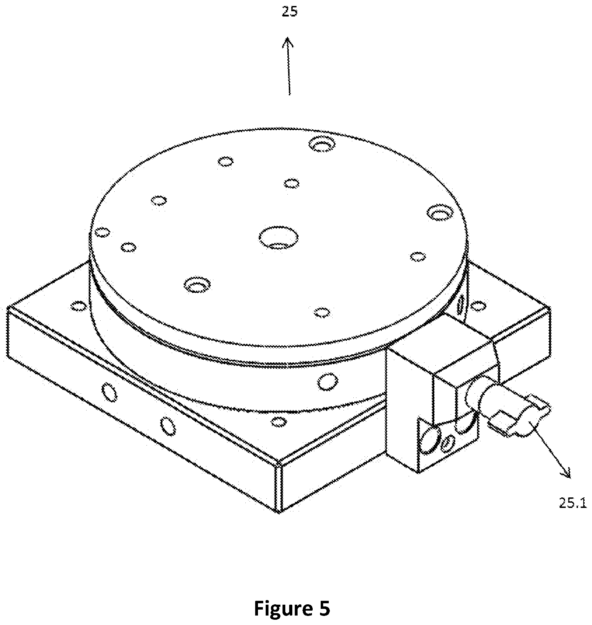

Figure 5 is side perspective view of location change unit.

### REFERENCE NUMBERS

L. Line type soldering system
1. Operator interface
2. Transformer
3. Processor
4. Electrical board
5. Power transmission members
6. Soldering unit
7. Pneumatic control box
8. Valve group
9. Filtered absorption line
10. System operating member
11. Support profile
12. Power transmission members support
13. Moving power transmission members support
14. Vertical linear motion system
14.1. Driving centre
14.2. Motion transfer part
15. Horizontal linear motion system
16. Motion housing
17. Motion guide
18. Trolley
19. Motion control member
20. Carrier profile
21. Arm profile
22. Shock absorber
23. Friction reducing part
24. Illuminating unit
25. Location changing unit
25.1. Adjustment lever
26. System stopping member
27. Indicator
28. Moving support
29. Electric switch
30. Reader
31. Driver
32. Compressor

### DETAILED DESCRIPTION OF THE INVENTION

In this detailed description, the preferred embodiments of the invention have been described in a manner not forming any restrictive effect and only for purpose of better understanding of the matter.

Line type soldering system (L) disclosed under the invention consists of an operator interface (1) automatically controls the soldering procedure, where the operator enters parameters required for soldering procedure and thus provides interaction between the operator and said line type soldering system (L). In a preferred embodiment of the invention, the operator interface (1) is in touch panel form.

The line type soldering system (L) comprises a transformer (2) to supply of energy needed. In a preferred embodiment of the invention, an adjustable variac transformer is used as transformer (2).

Processor (3) consists of integrated circuits controlling heat, time and required parameters of soldering procedure by means of performing certain logic and mathematical procedures electronically. In a preferred embodiment of the invention, a programmable logic controller is used.

Electric board (4) is an embodiment whereon the processor (3) and a driver (31) are located. The electrical board (4) adjusts electric power supplied from the transformer (2) and transmits to the related components. Power transmission members (5) have a role in transmission of power to the related members. The power transmission members (5) are carried by at least one power transmission members support (12).

Main mechanism performing soldering in the line type soldering system (L) is soldering unit (6). The soldering unit (6) contains a moving clamp and a fixed clamp pressing the material to be soldered. The moving clamp is capable to move. Capability to move is provided by moving clamp piston. Thus the moving clamp keeps material to be soldered in a fixed position by approaching and leaving the fixed clamp and thus facilitates soldering operation. The soldering unit (6) contains system operating member (10) on it. The system operating member (10) is part that operates the soldering unit (6) and in a preferred embodiment of the invention, the system operating member (10) may be soldering wire arm and hand switch or switches such as electro-mechanic process trigger.

In the line system soldering system (L) of the invention, a pneumatic control box (7) is used in order to convert the gas pressure into mechanic motion. Operation of all members driven by air, mainly compressing clamp system consists of moving clamp and fixed clamp in the soldering unit (6), is provided by the pneumatic control box (7). Valve group (8) and pressure regulator are located in the pneumatic control box (7). The valve group (8) controls the gas pressure provided through pneumatic control box (7) according to commands from the processor (3) and regulates gas passing. In a preferred embodiment of the invention, the pneumatic control box (7) comprises two valves namely, cooler valve and welding valve. The pressure regulator prevents fluctuations and non-balance in gas pressure coming from network and supplies gas to the system at fixed pressure.

The gas generated from melting of filling material used in soldering process must be removed from the environment. For this purpose the gas arising from melting is absorbed by filtered absorption line (9).

The line type soldering system (L) contains a support profile (11) with adjustable length under line type soldering system (L) in order to provide customization of soldering process for lines where soldering operation will be made.

At least one moving power transmission member support (13) different from power transmission members support (12) carrying the power transmission members (5) is also provided for transmission of power supplied from said transformer (2) to related parts. The moving power transmission members support (13) makes transmission without restrictions possible in order to provide power transmission to soldering unit (6) and other components need power.

Horizontal and vertical motion of the soldering unit (6) where soldering is performed is important for sensitive and quality soldering operation. Accordingly, the line soldering system (L) of the invention consists of vertical linear motion system (14) and horizontal linear motion system (15). When wished, horizontal and vertical motions are programmed by methods such as mechanical, electro-mechanical and/or pneumatic etc. and motions to desired positions automatically can be provided.

Vertical linear motion system (14) is located under the soldering unit (6) and consists of driving centre (14.1), motion transfer part (14.2), motion housing (16), motion guide (17) and trolley (18). Said vertical linear motion system (14) can be in different forms such as electronics, mechanical, manual, electrical driving etc. subject to features of line where soldering is made. Vertical linear motion system (14) contains a trolley (18) in form of sliding trolley under the soldering unit (6) in order to provide motion of soldering unit (6). Motion of the soldering unit (6) is provided as a result of motion of the trolley (18). Motion guide (17) is in the form of path guiding motion of said trolley (18). Motion guide (17) in the vertical linear motion system (14) embodiment can be rail and/or oiled system. In order to facilitate motion of said trolley (18) on motion guide (17), motion housing (16) is provided on the motion guide (17) surface. Said motion housing (16) reduces friction during motion and provides conduct of motion with the least loss. Bearing, sliding, rolling member, magnetic featured motion housing (16) may be used in the invention. The driving needed for vertical linear motion is provided by means of driving centre (14.1) provided in vertical linear motion system (14). The invention may use AC and DC type engines (servo, step, asynchrony and similar) pneumatic driving, magnetic driving, manual driving engines. The driving obtained from said driving centre (14.1) is converted into motion by the motion transfer part (14.2). In a preferred embodiment of the invention, spindle is used as motion transfer part (14.2). Alternative to spindle, the invention may also use timing belt toothed rack and / or manual systems.

Horizontal linear motion system (15) allowing motion on horizontal axis consists of motion housing (16), motion guide (17), arm profile (21), shock absorber (22) and moving support (28). Said horizontal linear motion system (15) can be electronic and/or mechanic subject to conditions of line where soldering will be made. Horizontal linear motion system (15) also provides right-left motion of arm profile (21). Horizontal linear motion system (15) is located on a carrier profile (20) in skeleton form. In this context, transformer (2) and electrical board (4) are also located on the carrier profile (20). Horizontal linear motion system (15) consists of motion housing (16) and motion guide (17) just same as vertical linear motion system (14). Bearing, sliding, rolling member, magnetic characteristic moving housing (16), rail and/or lubricated system as moving guide (17) can be used in the invention. Said horizontal linear moving system (15) consists of arm profile (21) sloped as per purpose of easier integration into line and connection topology. Said arm profile (21) contains soldering unit (6), driving centre (14.1), pneumatic control box (7), operator interface (1), filtered absorption pipe (9), moving power transfer members. Horizontal linear motion system (15) consists of shock absorber (22) in order to prevent the vibrations that might occur in horizontal linear motion and to minimize the produced shock.

Friction reducing part (23) is a component located under the arm profile (21) in order to reduce friction and provide easy horizontal linear motion. A preferred embodiment of the invention consists of at least a tire as friction reducing part (23).

The invention also consists of a motion control member (19) providing command and control of vertical linear motion system (14) and horizontal linear motion system (15) providing motion.

Further an illumination unit (24) is provided in order to provide illumination of the place where soldering operation will be performed. Any kind of lightning can be used in the invention as per requirements of the invention and a preferred embodiment of the invention consists of LED. Said illumination unit (24) is located in the clamp section of the soldering unit (6).

Line type soldering system (L) consists of a system stopping member (26) stopping the system immediately when the line type soldering system (L) requires urgent closing down.

Operation status of line type soldering system (L) is indicated by an indicator (27). In a preferred embodiment of the invention the indicator (27) is mounted on a profile located on the line where soldering unit (6) is. Said indicator (27) consists of double yellow-red signal lamp and red indicates that system stopped and yellow means that system is in running status. Electric switch (29) is the member switching on/off the electric current supplied to line type soldering system (L).

A location changing unit (25) is designed to play the said soldering unit (6) as per need. In a preferred embodiment of the invention, location changing unit (25) is in disk form. Soldering unit (6) is mounted to location changing unit (25) which is in disk form and moves together with location changing unit (25). Motion of the location changing unit (25) is provided by adjustment lever (25.1). Adjustment lever (25.1) located on the location changing unit (25) preferably in disk form can be controlled by more than one type of system automatically or manually. In a preferred embodiment of the invention, the adjustment lever (25.1) is pin.

A reader (30) serves to read soldering control factors programmed in the processor (3) and to recall the related data chain in the processor (3) as required by the product input. Thus automatic soldering operation is possible. The data chain matching process can be made manually or by help of smart data recognition systems (QR reader, barcode, RFID etc.) In a preferred embodiment of the invention, barcode reader is used as reader (30).

The invention consists of AC or OC type engine driver (31) providing motion of the soldering unit (6) in order to provide control of said driving centre (14.1) by the processor (3).

Control of compressing air regulated by valve group (8) and pressure regulator, generation of compressed air, moving and fixed clamp motions is provided by means of a compressor (32) provided in the invention.

The operation principle of the line type soldering system (L) of the invention is as follows:
Upon turning the electric switch (29), the current obtained from electric board (4) is adjusted and transmitted to the related members by help of power transmission members (5). Product and related database in the processor are matched by means of the reader (30) and the factors of the soldering operation that can be determined by the processor (3) are assigned. Parameters required for soldering are put into estimation and adjustment is made by variac adjustment system provided on the transformer (2). The parameters that can be determined by the operator are determined and selected from operator interface (1).

Two different linear motion systems are designed in order to move the soldered material to the placement point on the line. Soldering unit (6) is moved vertically by vertical linear motion system (14) and horizontally by horizontal linear motion system (15). In a preferred embodiment of the invention, in order to go to the related part of the line where the operator works, the operator moves horizontal linear motion system (15) by help of handle located on the arm profile (21) which is motion control member (19) and moves arm profile (21) located on soldering unit (6) on linear trolley (18) system by help of bearing which is moving housing (16) on the rail which is motion guide (17). During this action the friction reducing member (23) helps horizontal linear motion system (15). The shocks, vibrations that might occur on rail during motion are minimized by the shock absorber (22).

DC engine acting as driving centre (14.1) controlled by joystick and speed control member which are motion control member (19) for providing motion on vertical axis is moved up and down at desired speed on the sliding system as motion housing, spindle as motion transfer part (14.2). After the soldering unit is brought to the coordinate desired by the operator, direction of soldering unit (6) can be changed by help o the location change unit (25. Adjustment screw (25 keeps housing on the location changing unit (25) during each stage and provides motion of location changing unit (25) on rotation axis. After soldering unit (6) is brought to desired location, tips of materials to be soldered are joined and soldering wire is taken in the needed amount from the arm where soldering wire is in the soldering unit (6) and joined ends are placed in the clamp system in the soldering unit (6). System operating member (10) in the soldering unit (6) is pressed, pneumatic control box (7), valve group (8) and compressor (22) are turned on and clamp system starts working and the material to be soldered is compressed and the soldering filling material is taken from soldering wire arm in the soldering unit (6) in the amount of need and soldering operation is performed. Cold air is blown to protect outer shield in order to prevent melting of outer shield on the material soldered, by help of cooling valve which is one of valve group (8) member and compressor (32). Filter absorption line removes the undesired gases from the system after soldering process. Then the soldered material is directly placed in the desired place according to connection topology. In cases when it is urgently required to stop soldering operation, the system stopping member (26) is activated and line type soldering system (L) is closed.

## Claims

1. A line type soldering system (L) for use in soldering processes, comprising;
• at least one transformer (2) configured to supply the required energy,
• at least one processor (3) configured to control required parameters such as heat, time during soldering operation,
the line type soldering system (L) being **characterised by** the following:
• a soldering unit (6) configured to conduct soldering operation and comprises; ∘ a compressing clamp system consisting of a moving clamp, a fixed clamp, a moving clamp piston, wherein the moving clamp configured to be moved by the moving clamp piston, so that the the moving clamp keeps material to be soldered in a fixed position by approaching and leaving the fixed clamp and thus facilitates soldering operation ∘ a system operating member (10) on the soldering unit configured to operate the soldering unit (6)
• a pneumatic control box (7) configured to convert the air pressure into mechanic motion and providing operation of at least the compressing clamp system consisting of the moving clamp and the fixed clamp of the soldering unit, the pneumatic control box (7) containing a pressure regulator regulating pressure,
• a valve group (8) for controlling the gas pressure provided through the pneumatic control box (7) according to commands from the processor (3) and regulates gas passing in order to convert gas pressure into mechanic motion,
• a vertical linear motion system (14) wherein the soldering unit (6) is located, and consisting of a driving centre (14.1) providing driving required to vertical linear motion, a motion transfer part (14.2) providing linear motion by the driving taken from the driving centre (14.1),
• a horizontal linear motion system (15) containing an arm profile (21) whereon the soldering unit (6) is located and which is sloped to provide integration to line and for proper connection topology.

2. The line type soldering system (L) according to claim 1, **characterised by** comprising an operator interface (1) optionally in a touch panel form, configured for providing interaction betweer operator and the line type soldering system (L).

3. The line type soldering system (L) according to claim 1, wherein;
• the transformer (2) is a variac type transformer, and/or
• the processor (3) is a programmable logic controller, and/or
• the valve group (8) comprises at least one cooler valve and at least one welding valve.

4. The line type soldering system (L) according to claim 1, **characterised by** comprising a system operating member (10), optionally which is a soldering wire arm and/or hand switch, configured for running the soldering unit (6).

5. The line type soldering system (L) according to claim 1, **characterised by** comprising a filtered absorption line (9) configured for absorbing the gas generated from melting of the filling material in soldering operation.

6. The line type soldering system (L) according to claim 1, **characterised by** comprising a support profile (11) configured for allowing adjustment of length according to length of line and carrying all components of the line type soldering system (L).

7. The line type soldering system (L) according to any one of the preceding claims, wherein;
• the vertical line motion system (14) is electronic, mechanic, manual or electric driven, and/or
• the driving centre (14.1) is in pneumatic or gas pusher or AC or DC type engine form, and/or
• the motion transfer part (14.2) is type of timing belt, spindle, worm screw and nut, toothed rack or manual.

8. The line type soldering system (L) according to any one of the preceding claims, wherein the horizontal linear motion system (15) is electronic or mechanic.

9. The line type soldering system (L) according to any one of the preceding claims, comprising a motion housing (16) with a rolling member or a magnetic housing.

10. The line type soldering system (L) according to any one of the preceding claims, **characterised by** comprising a motion guide (17) in the form of rail or lubricated system and/or comprising a trolley (18) in sliding trolley form located on the motion guide (17) in order to provide linear motion.

11. The line type soldering system (L) according to any one of the preceding claims, **characterised by** comprising a motion control member (19) configured to provide control and command on the vertical linear motion system (14) and the horizontal linear motion system (15).

12. The line type soldering system (L) according to any one of the preceding claims, comprising a shock absorber (22) configured for minimizing the vibration to be caused by the horizontal linear motion system (15).

13. The line type soldering system (L) according to any one of the preceding claims, comprising a friction reducing part (23), optionally in tire form, located under the arm profile (21) and configured for reducing friction.

14. The line type soldering system (L) according to any one of above claims, comprising an indicator (27) configured for indicating operating status of the line type soldering system (L).

15. The line type soldering system (L) according to any one of above claims, comprising a compressor (32) configured for providing required pressure to the line type soldering system (L) and compressing air regulation in pressure regulator.

## Patentansprüche

1. Linien-Lötsystem (L) zur Verwendung in Lötprozessen, umfassend:
• zumindest einen Transformator (2), der konfiguriert ist, um die erforderliche Energie zu liefern,
• zumindest einen Prozessor (3), der konfiguriert ist, um erforderliche Parameter wie Wärme, Zeit während Lötbetrieb zu steuern,
wobei das Linien-Lötsystem (L) durch das Folgende gekennzeichnet ist:
• eine Löteinheit (6), die konfiguriert ist, um Lötbetrieb durchzuführen und Folgendes umfasst: ∘ ein Kompressionsklemmsystem, das aus einer beweglichen Klemme, einer festen Klemme, einem beweglichen Klemmkolben besteht, wobei die bewegliche Klemme konfiguriert ist, um durch den beweglichen Klemmkolben bewegt zu werden, sodass die bewegliche Klemme zu lötendes Material in einer festen Position hält, indem sie sich der festen Klemme nähert und diese verlässt und somit Lötbetrieb erleichtert, und ∘ ein Systembetriebselement (10) an der Löteinheit, das konfiguriert ist, um die Löteinheit (6) zu betreiben,
• einen pneumatischen Steuerkasten (7), der konfiguriert ist, um den Luftdruck in mechanische Bewegung umzuwandeln und Betrieb von zumindest dem Kompressionsklemmsystem bereitstellt, das aus der beweglichen Klemme und der festen Klemme der Löteinheit besteht, wobei der pneumatische Steuerkasten (7) einen Druckregler enthält, der Druck regelt,
• eine Ventilgruppe (8) zum Steuern des Gasdrucks, der durch den pneumatischen Steuerkasten (7) bereitgestellt wird, gemäß Befehlen von dem Prozessor (3), und Gasdurchgang regelt, um Gasdruck in mechanische Bewegung umzuwandeln,
• ein vertikales Linearbewegungssystem (14), in dem sich die Löteinheit (6) befindet, und bestehend aus einem Antriebszentrum (14.1), das Antrieb bereitstellt, der für vertikale Linearbewegung erforderlich ist, einem Bewegungsübertragungsteil (14.2), das Linearbewegung durch den Antrieb bereitstellt, der von dem Antriebszentrum (14.1) genommen wird,
• ein horizontales Linearbewegungssystem (15), das ein Armprofil (21) enthält, worauf sich die Löteinheit (6) befindet und die geneigt ist, um Integration an Linie und für ordnungsgemäße Verbindungstopologie bereitzustellen.

2. Linien-Lötsystem (L) nach Anspruch 1, **dadurch gekennzeichnet, dass** es eine Betreiberschnittstelle (1) optional in einer Berührungsfeldform umfasst, die zum Bereitstellen von Interaktion zwischen Betreiber und dem Linien-Lötsystem (L) konfiguriert ist.

3. Linien-Lötsystem (L) nach Anspruch 1, wobei:
• der Transformator (2) ein Variac-Transformator ist, und/oder
• der Prozessor (3) eine programmierbare Logiksteuerung ist, und/oder
• die Ventilgruppe (8) zumindest ein Kühlerventil und zumindest ein Schweißventil umfasst.

4. Linien-Lötsystem (L) nach Anspruch 1, **dadurch gekennzeichnet, dass** es ein Systembetriebselement (10) umfasst, das optional ein Lötdrahtarm und/oder ein Handschalter ist, das zum Laufenlassen der Löteinheit (6) konfiguriert ist.

5. Linien-Lötsystem (L) nach Anspruch 1, **dadurch gekennzeichnet, dass** es eine gefilterte Absorptionslinie (9) umfasst, die zum Absorbieren des Gases konfiguriert ist, das beim Schmelzen des Füllmaterials in Lötbetrieb erzeugt wird.

6. Linien-Lötsystem (L) nach Anspruch 1, **dadurch gekennzeichnet, dass** es ein Stützprofil (11) umfasst, das konfiguriert ist, um Einstellung von Länge gemäß Länge der Linie zu ermöglichen und alle Komponenten des Linien-Lötsystems (L) trägt.

7. Linien-Lötsystem (L) nach einem der vorhergehenden Ansprüche, wobei:
• das Vertikallinienbewegungssystem (14) elektronisch, mechanisch, manuell oder elektrisch angetrieben ist, und/oder
• das Antriebszentrum (14.1) in pneumatischer oder Gasschieber- oder AC- oder DC-Triebwerksform ist, und/oder
• das Bewegungsübertragungsteil (14.2) von Zahnriemen, Spindel, Schneckenschraube und -mutter, Zahnstange oder manuell ist.

8. Linien-Lötsystem (L) nach einem der vorhergehenden Ansprüche, wobei das horizontale Linearbewegungssystem (15) elektronisch oder mechanisch ist.

9. Linien-Lötsystem (L) nach einem der vorhergehenden Ansprüche, umfassend ein Bewegungsgehäuse (16) mit einem Rollelement oder einem Magnetgehäuse.

10. Linien-Lötsystem (L) nach einem der vorhergehenden Ansprüche, **dadurch gekennzeichnet, dass** es eine Bewegungsführung (17) in der Form von Schiene oder geschmiertem System umfasst und/oder einen Wagen (18) in Gleitwagenform umfasst, der sich an der Bewegungsführung (17) befindet, um Linearbewegung bereitzustellen.

11. Linien-Lötsystem (L) nach einem der vorhergehenden Ansprüche, **dadurch gekennzeichnet, dass** es ein Bewegungssteuerelement (19) umfasst, das konfiguriert ist, um Steuerung und Befehl an dem vertikalen Linearbewegungssystem (14) und dem horizontalen Linearbewegungssystem (15) bereitzustellen.

12. Linien-Lötsystem (L) nach einem der vorhergehenden Ansprüche, umfassend einen Stoßdämpfer (22), der zum Minimieren der Vibration, die durch das horizontale Linearbewegungssystem (15) zu bewirken ist, konfiguriert ist.

13. Linien-Lötsystem (L) nach einem der vorhergehenden Ansprüche, umfassend ein Reibungsreduzierteil (23), optional in Reifenform, das sich unter dem Armprofil (21) befindet und zum Reduzieren von Reibung konfiguriert ist.

14. Linien-Lötsystem (L) nach einem der obigen Ansprüche, umfassend einen Indikator (27), der zum Anzeigen von Betriebsstatus des Linien-Lötsystems (L) konfiguriert ist.

15. Linien-Lötsystem (L) nach einem der obigen Ansprüche, umfassend einen Kompressor (32), der zum Bereitstellen von erforderlichem Druck an das Linien-Lötsystem (L) und Komprimieren von Luftregelung in Druckregler konfiguriert ist.

## Revendications

1. Système de brasage de type linéaire (L) destiné à être utilisé dans des processus de brasage, comprenant :
• au moins un transformateur (2) configuré pour fournir l'énergie requise,
• au moins un processeur (3) configuré pour commander des paramètres requis tels que la chaleur, le temps durant l'opération de brasage,
le système de brasage de type linéaire (L) étant **caractérisé par** ce qui suit :
• une unité de brasage (6) configurée pour mener une opération de brasage et comprenant : ∘ un système de pince de compression constitué d'une pince mobile, d'une pince fixe, d'un piston de pince mobile, ladite pince mobile étant configurée pour être déplacée par le piston de pince mobile, afin que la pince mobile maintienne le matériau à braser dans une position fixe en s'approchant et en quittant la pince fixe et facilite ainsi l'opération de brasage et ∘ un élément de fonctionnement du système (10) sur l'unité de brasage configuré pour faire fonctionner l'unité de brasage (6)
• un boîtier de commande pneumatique (7) configuré pour convertir la pression d'air en mouvement mécanique et assurer le fonctionnement d'au moins le système de pince de compression constitué de la pince mobile et de la pince fixe de l'unité de brasage, le boîtier de commande pneumatique (7) contenant un régulateur de pression régulant la pression,
• un groupe de soupapes (8) destiné à commander la pression de gaz fournie à travers le boîtier de commande pneumatique (7) selon les instructions provenant du processeur (3) et régule le passage du gaz afin de convertir la pression du gaz en mouvement mécanique,
• un système de mouvement linéaire vertical (14) ladite unité de brasage (6) étant située, et consistant en un centre d'entraînement (14.1) fournissant l'entraînement nécessaire au mouvement linéaire vertical, une partie de transfert de mouvement (14.2) fournissant un mouvement linéaire par l'entraînement pris à partir du centre d'entraînement (14.1),
• un système de mouvement linéaire horizontal (15) contenant un profil de bras (21) sur lequel l'unité de brasage (6) est située et qui est inclinée pour fournir une intégration à la ligne et pour une topologie de connexion appropriée.

2. Système de brasage de type linéaire (L) selon la revendication 1, caractérisé en comprenant une interface opérateur (1) éventuellement sous la forme d'un écran tactile, configurée pour fournir une interaction entre l'opérateur et le système de brasage de type linéaire (L).

3. Système de brasage de type linéaire (L) selon la revendication 1,
• ledit transformateur (2) étant un transformateur de type Variac, et/ou
• ledit processeur (3) étant un dispositif de commande logique programmable, et/ou
• ledit groupe de soupapes (8) comprenant au moins une soupape de refroidissement et au moins une soupape de soudage.

4. Système de brasage de type linéaire (L) selon la revendication 1, caractérisé en comprenant un élément de fonctionnement du système (10), qui est éventuellement un bras de fil de brasage et/ou un commutateur manuel, configuré pour faire fonctionner l'unité de brasage (6).

5. Système de brasage de type linéaire (L) selon la revendication 1, caractérisé en comprenant une ligne d'absorption filtrée (9) configurée pour absorber le gaz généré par la fusion du matériau de remplissage lors de l'opération de brasage.

6. Système de brasage de type linéaire (L) selon la revendication 1, caractérisé en comprenant un profilé de support (11) configuré pour permettre un réglage de la longueur selon la longueur de la ligne et portant tous les composants du système de brasage de type linéaire (L).

7. Système de brasage de type linéaire (L) selon l'une quelconque des revendications précédentes,
• ledit système de mouvement linéaire verticale (14) étant à entraînement électronique, mécanique, manuel ou électrique, et/ou
• ledit centre d'entraînement (14.1) étant sous forme de pousseur pneumatique ou à gaz ou de moteur de type CA ou CC, et/ou
• ladite partie de transfert de mouvement (14.2) étant un type de courroie de distribution, de broche, de vis sans fin et d'écrou, de crémaillère ou manuel.

8. Système de brasage de type linéaire (L) selon l'une quelconque des revendications précédentes, ledit système de mouvement linéaire horizontal (15) étant électronique ou mécanique.

9. Système de brasage de type linéaire (L) selon l'une quelconque des revendications précédentes, comprenant un logement de mouvement (16) avec un élément roulant ou un logement magnétique.

10. Système de brasage de type linéaire (L) selon l'une quelconque des revendications précédentes, caractérisé en comprenant un guide de mouvement (17) sous forme de rail ou de système lubrifié et/ou comprenant un chariot (18) sous forme de chariot coulissant situé sur le guide de mouvement (17) afin de fournir un mouvement linéaire.

11. Système de brasage de type linéaire (L) selon l'une quelconque des revendications précédentes, caractérisé en comprenant un élément de commande de mouvement (19) configuré pour fournir une commande et des instructions sur le système de mouvement linéaire vertical (14) et le système de mouvement linéaire horizontal (15).

12. Système de brasage de type linéaire (L) selon l'une quelconque des revendications précédentes, comprenant un amortisseur de choc (22) configuré pour minimiser les vibrations devant être causées par le système de mouvement linéaire horizontal (15).

13. Système de brasage de type linéaire (L) selon l'une quelconque des revendications précédentes, comprenant une partie de réduction de frottement (23), éventuellement sous forme de pneu, située sous le profil de bras (21) et configurée pour réduire le frottement.

14. Système de brasage de type linéaire (L) selon l'une quelconque des revendications ci-dessus, comprenant un indicateur (27) configuré pour indiquer l'état de fonctionnement du système de brasage de type linéaire (L).

15. Système de brasage de type linéaire (L) selon l'une quelconque des revendications ci-dessus, comprenant un compresseur (32) configuré pour fournir la pression requise au système de brasage de type linéaire (L) et comprimer la régulation de l'air dans le régulateur de pression.
